# EUROPEAN PATENT SPECIFICATION

(11) **EP 3 610 991 B1**
(45) Date of publication and mention of the grant of the patent: **30.08.2023**
(21) Application number: 19188706.6
(22) Date of filing: 26.07.2019
(51) Int. Cl.: B25F 5/00

(54) **SYSTEM AND METHOD FOR DETERRING THEFT**
SYSTEM UND VERFAHREN ZUR ABSCHRECKUNG VON DIEBSTAHL
SYSTÈME ET PROCÉDÉ VISANT À DÉCOURAGER LE VOL

(30) Priority: 14.08.2018 US 201862718684 P
(43) Date of publication of application: 19.02.2020
(73) Proprietor: Black & Decker Inc., New Britain, CT 06053 (US)
(72) Inventor: Brotto, Danny C., Baltimore, MD Maryland 21234 (US); Cruise, Nathan J., Phoenix, MD Maryland 21131 (US); Ashinghurst, Jeremy D., Halethorpe, MD Maryland 21227 (US); Leh, Jason K., Rosedale, MD Maryland MD21237 (US)
(74) Representative: SBD IPAdmin

(56) References cited:
- EP-A2- 1 690 648
- EP-A2- 2 418 052
- US-A1- 2008 238 609
- US-A1- 2014 158 389

## Description

The present invention relates to a system and method for deterring theft, and more particularly to a system and method for deterring theft of items in a retail environment. A system according to the preamble of claim 1 is already known from EP 2 418 052 A2.

Theft of inventory at brick-and-mortar stores is a problem resulting in lost revenue and incorrect inventory reporting. Prior art solutions, which include putting the highly-stolen products under lock, do not completely eliminate the problem as the theft can occur after the display lock has been unlocked. Theft deterrent systems such as antitheft lanyards and locks adversely burden the checkout processes, are costly, need to be maintained and interfere with the buying experience.

It is an object of the invention to provide an improved system and method for deterring theft of items in a retail environment. Preferably such system and method will provide a simple checkout procedure to validate the purchase.

A first aspect of the present invention provides a theft deterring system according to Claim 1 of the appendant claims.

A second aspect of the invention provides a method of deterring theft according to Claim 11.

Preferred, and other optional, features of the invention are described and defined in the dependant claims.

Preferred embodiments of the invention will now be described, by way of example, with reference to the accompanying drawings, of which:
Figure 1 is a perspective view of an embodiment of the theft deterring system;
Figure 2 is a block diagram of a first embodiment of a power tool that is part of the theft deterring system;
Figure 3 is a block diagram of a second embodiment of a power tool that is part of the theft deterring system; and
Figure 4 is a block diagram of an embodiment of a power tool battery pack that is part of the theft deterring system.

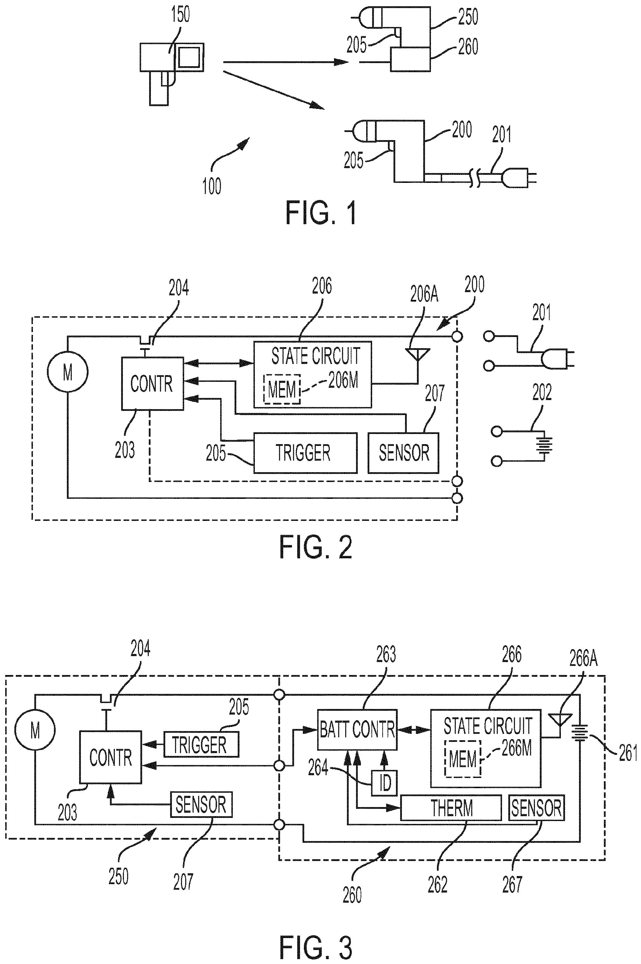

FIG. 1 shows a perspective view of a theft deterring system 100, which preferably includes a power tool 200 and/or 250, and a tag programmer 150. Referring to FIG. 2, power tool 200 may have a motor M connected to a power source, such as AC power via power cord 201, and/or battery pack 202. A controller 203 may control a switch (e.g. a FET) 204 for controlling the amount of power provided to motor M. Controller 203 may use inputs from the trigger 205 and/or other sensors 207 to vary the amount of power provided to motor M.

Controller 203 may also receive input from a state circuit 206. State circuit 206 may have a memory 206M which stores a state value. State circuit 206 may have an antenna 206A which receives a signal from tag programmer 150. Persons skilled in the art may recognize that state circuit 206 may be a passive RFID tag circuit with rewritable memory (which can be powered by the signal transmitted by tag programmer 150), or an active RFID tag circuit with rewritable memory (which can be powered by the AC power source, battery pack 202 or a separate battery (not shown)).

With such arrangement, the memory 206M can be set to have a value representative of a first state. For example, such value may be "0" which could represent an unactivated state. Such value can be set at manufacture or during shipping from the factory, for example.

A person may take such power tool 200 from a store display to a register for payment. At that time, a store employee can use tag programmer 150 to change the value set in memory 206M. For example, such value can be changed to "1" which could represent an activated state. When the person then tries to use the power tool 200, controller 203 would query state circuit 206 (and/or memory 206M) when trigger 205 is activated. Once controller 203 sees the value representing the activated state, it can provide power to the motor M.

If a person were to steal power tool 200 without it being properly processed at check out, the value set in memory 206M would not be changed. As before, when the person then tries to use the power tool 200, controller 203 would query state circuit 206 (and/or memory 206M) when trigger 205 is activated. Because controller 203 would not see the value representing the activated state (and/or see a value representing the unactivated state), controller 203 would not provide any power to the motor M, or instead it could provide power to motor M at a lower amount than if the memory 206M had the value representing the activated state, for example.

Persons skilled in the art shall recognize that the system 100 can have more than two states. For example, memory 206M could be programmed to have different values representing unactivated, partly activated and fully activated states. In the unactivated state, power tool 200 may not turn on, may only work at a lower setting than when fully activated, and/or may only have some features (such as motor "soft start") working, if any. For example, in the partly activated state, power tool 200 may only work at a lower setting (e.g. a lower power setting) than when fully activated and/or may work at the same setting as a fully activated power tool but only have some features (such a motor soft start) working, if any. In the fully activated state, power tool 200 may work at the full settings and/or have all features (such a motor soft start) working.

Referring to FIG. 3, power tool 250 may have similar features to power tool 200, and like numerals refer to like parts. Power tool 250 may have a motor M connected to a battery pack 260. A controller 203 may control a switch (e.g. a FET) 204 for controlling the amount of power provided to motor M. Controller 203 may use inputs from the trigger 205 and/or other sensors 207 to vary the amount of power provided to motor M.

Battery pack 260 may have at least one cell 261, which is preferably rechargeable. In addition, battery pack 260 may have a battery control circuit 263 which receives inputs from different sensors 267, thermistor 262, ID resistor 264 and/or controller 203 to provide data and/or instructions to controller 203. Such data and/or instructions can be provided by battery control circuit 263 to controller 203 upon request of controller 203, or automatically. Such data can be used by controller 203 to determine the amount of power provided to motor M. Alternatively or additionally, battery control circuit 263 can provide instructions to controller 203 on the amount of power provided to motor M.

Battery control circuit 263 may also receive input from a state circuit 266. State circuit 266 may have a memory 266M which stores a state value. State circuit 266 may have an antenna 266A which receives a signal from tag programmer 150. Persons skilled in the art may recognize that state circuit 266 may be a passive RFID tag circuit with rewritable memory (which can be powered by the signal transmitted by tag programmer 150), or an active RFID tag circuit with rewritable memory (which, for example, can be powered by the cell(s) 261 or a separate battery cell (not shown)).

With such arrangement, the memory 266M can be set to have a value representative of a first state. For example, such value may be "0" which could represent an unactivated state. Such value can be set at manufacture or during shipping from the factory, for example.

A person may take such power tool 250 or battery pack 260 from a store display to a register for payment. At that time, a store employee can use tag programmer 150 to change the value set in memory 266M. For example, such value can be changed to "1" which could represent an activated state. When the person then tries to use the power tool 250, controller 203 would query battery control circuit 263, state circuit 266 and/or memory 266M when trigger 205 is activated. Once controller 203 sees the value representing the activated state, it can provide power to the motor M.

If a person were to steal power tool 250 or battery pack 260 without it being properly processed at check out, the value set in memory 266M would not be changed. As before, when the person then tries to use the power tool 250, controller 203 would query battery control circuit 263, state circuit 266 and/or memory 266M when trigger 205 is activated. Because controller 203 would not see the value representing the activated state (and/or see a value representing the unactivated state), controller 203 would not provide any power to the motor M, or instead it could provide power to motor M at a lower amount than if the memory 266M had the value representing the activated state, for example.

Persons skilled in the art shall recognize that the system 100 can have more than two states. For example, memory 266M could be programmed to have different values representing unactivated, partly activated and fully activated states. In the unactivated state, for example, power tool 250 may not turn on, may only work at a lower setting than when fully activated, and/or may only have some features (such a motor soft start) working, if any. In the partly activated state, power tool 250 may only work at a lower setting than when fully activated and/or may work at the same setting as a fully activated power tool but only have some features (such a motor soft start) working, if any. In the fully activated state, power tool 250 may work at the full settings and/or have all features (such a motor soft start) working.

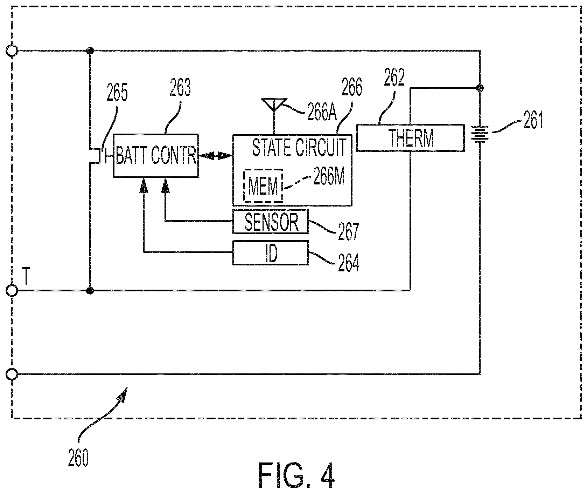

An alternative battery pack 260 example is shown in FIG. 4, where like numerals refer to like parts. In this embodiment, controller 203 can receive temperature data from thermistor 262, so if the temperature of battery pack 260 goes above a certain threshold, it can stop providing power to motor M. Battery control circuit 263 does not provide instructions to controller 203 upon request of controller 203. Instead, battery control circuit 263 controls a switch (e.g. a FET) 265. If battery control circuit 263 turns on FET 265, the voltage of the terminal T is raised. Controller 203 could interpret such voltage to be a high temperature signal from thermistor 262, and stop providing power to motor M, for example.

Battery control circuit 263 can receive inputs from different sensors 267 and/or ID resistor 264. Like before, battery control circuit 263 may also receive input from state circuit 266. When the person then tries to use the power tool 250, battery control circuit 263 would sense the current draw. In view of such current draw, battery control circuit 263 would query state circuit 266 and/or memory 266M. Once battery control circuit 263 sees the value representing the activated state, it would not activate FET 265, allowing controller 203 to provide power to the motor M.

If a person were to steal power tool 250 or battery pack 260 without it being properly processed at check out, the value set in memory 266M would not be changed. As before, battery control circuit 263 would sense the current draw. In view of such current draw, battery control circuit 263 would query state circuit 266 and/or memory 266M. Once battery control circuit 263 sees the value representing the unactivated state, it would activate FET 265, which would urge controller 203 to not provide power to the motor M.

Persons skilled in the art shall recognize that memories 206M, 266M may also be reprogrammed via a non-wireless method. For example, power tools 200, 250 and/or battery packs 260 may have a USB port which allows someone at check out to plug in a device 150 that would reprogram memories 206M, 266M to have the value representative of the activated states. Alternatively such device 150 can be plugged into the terminals of power tool 250, power cord 201 and/or battery pack 260.

It will be understood that the above description and the drawings are examples of particular implementations of the invention, but that other implementations of the invention are included in the scope of the claims.

## Claims

1. A theft deterring system (100), comprising:
a power tool (200, 250), comprising: a motor (M) connectable to a power source, a switch (204, 265) connected to the motor (M), a controller (203) connected to the switch (204, 265), the controller (203) controlling the switch (204, 265) for controlling an amount of power provided to the motor (M), and a state circuit (206, 266) having a memory (206M, 266M) for storing a state value;
wherein the controller (203) is configured to activate the switch (204, 265) to provide power to the motor (M) when the state value stored in the memory (206M, 266M) equals a desired value;
wherein the stored state value represents one of: an unactivated state in which the power tool (200, 250) may not be turned on and a fully activated state in which the power tool (200, 250) may work at full settings and/or have all features working; **characterized in that** the stored state value can further represent a partly activated state in which the power tool (200, 250) may work only at a lower power setting and/or may have only some features working.

2. A theft deterring system (100) according to Claim 1, wherein the state circuit (206, 266) is connected to the controller (203).

3. A theft deterring system (100) according to Claim 1 or Claim 2, wherein the state circuit (206, 266) is at least one of a passive RFID tag circuit with rewritable memory and an active RFID tag circuit with rewritable memory.

4. A theft deterring system (100) according to any preceding claim, wherein the power source is a battery pack (202, 260) connectable to the motor (M).

5. A theft deterring system (100) according to Claim 4, wherein the battery pack (202, 260) comprises a battery control circuit (263) configured to provide data and/or instructions to the controller (203).

6. A theft deterring system (100) according to Claim 5, wherein the state circuit (206, 266) is connected to the battery control circuit (263).

7. A theft deterring system (100) according to any one of claims 4 to 6, wherein the switch (265) is disposed within the battery pack (260).

8. A theft deterring system (100) according to any preceding claim, further comprising a tag programmer (150) for changing the stored value.

9. A theft deterring system (100) according to any preceding claim, wherein the state circuit (206, 266) further comprises an antenna (206A, 266A).

10. A theft deterring system (100) according to Claim 9 when dependent upon Claim 8, wherein the antenna (206A, 266A) is configured to receive a signal from the tag programmer (150).

11. A method of deterring theft, comprising implementing a theft deterring system (100) according to any preceding claim.

## Patentansprüche

1. Diebstahlabschreckungssystem (100), umfassend:
ein Elektrowerkzeug (200, 250), umfassend: einen Motor (M), der mit einer Leistungsquelle verbunden werden kann, einen Schalter (204, 265), der mit dem Motor (M) verbunden ist, eine Steuereinheit (203), die mit dem Schalter (204, 265) verbunden ist, wobei die Steuereinheit (203) den Schalter (204, 265) steuert, um eine Strommenge zu steuern, die an den Motor (M) bereitgestellt wird, und eine Zustandsschaltung (206, 266), die einen Speicher (206M, 266M) zum Speichern eines Zustandswerts aufweist;
wobei die Steuereinheit (203) konfiguriert ist, den Schalter (204, 265) zu aktivieren, um Strom an den Motor (M) bereitzustellen, wenn der in dem Speicher (206M, 266M) gespeicherte Zustandswert gleich einem gewünschten Wert ist;
wobei der gespeicherte Zustandswert einen des Folgenden darstellt: einen unaktivierten Zustand, in dem das Elektrowerkzeug (200, 250) nicht eingeschaltet werden kann, und einen vollständig aktivierten Zustand, in dem das Elektrowerkzeug (200, 250) mit vollständigen Einstellungen arbeiten kann und/oder alle Funktionen verfügbar aufweist; **dadurch gekennzeichnet, dass** der gespeicherte Zustandswert weiter einen teilweise aktivierten Zustand darstellen kann, in dem das Elektrowerkzeug (200, 250) nur mit einer niedrigeren Leistungseinstellung arbeiten kann und/oder nur manche Funktionen verfügbar aufweisen kann.

2. Diebstahlabschreckungssystem (100) nach Anspruch 1, wobei die Zustandsschaltung (206, 266) mit der Steuereinheit (203) verbunden ist.

3. Diebstahlabschreckungssystem (100) nach Anspruch 1 oder Anspruch 2, wobei die Zustandsschaltung (206, 266) zumindest eine von einer passiven RFID-Etikett-Schaltung mit wiederbeschreibbarem Speicher und einer aktiven RFID-Etikett-Schaltung mit wiederbeschreibbarem Speicher ist.

4. Diebstahlabschreckungssystem (100) nach einem vorstehenden Anspruch, wobei die Leistungsquelle ein Batteriepack (202, 260) ist, der mit dem Motor (M) verbunden werden kann.

5. Diebstahlabschreckungssystem (100) nach Anspruch 4, wobei der Batteriepack (202, 260) einen Batterieregelkreis (263) umfasst, die dazu konfiguriert ist, Daten und/oder Anweisungen an die Steuereinheit (203) bereitzustellen.

6. Diebstahlabschreckungssystem (100) nach Anspruch 5, wobei die Zustandsschaltung (206, 266) mit dem Batterieregelkreis (263) verbunden ist.

7. Diebstahlabschreckungssystem (100) nach einem der Ansprüche 4 bis 6, wobei der Schalter (265) in dem Batteriepack (260) angeordnet ist.

8. Diebstahlabschreckungssystem (100) nach einem vorstehenden Anspruch, weiter umfassend einen Etikettprogrammierer (150) zum Ändern des gespeicherten Werts.

9. Diebstahlabschreckungssystem (100) nach einem vorstehenden Anspruch, wobei die Zustandsschaltung (206, 266) weiter eine Antenne (206A, 266A) umfasst.

10. Diebstahlabschreckungssystem (100) nach Anspruch 9, wenn von Anspruch 8 abhängig, wobei die Antenne (206A, 266A) konfiguriert ist, ein Signal von dem Etikettprogrammierer (150) zu empfangen.

11. Verfahren zum Abschrecken von Diebstahl, umfassend Implementieren eines Diebstahlabschreckungssystems (100) nach einem vorstehenden Anspruch.

## Revendications

1. Système de dissuasion de vol (100), comprenant :
un outil électrique (200, 250) comprenant : un moteur (M) pouvant être connecté à une source d'énergie, un interrupteur (204, 265) connecté au moteur (M), un dispositif de commande (203) connecté à l'interrupteur (204, 265), le dispositif de commande (203) commandant l'interrupteur (204, 265) pour commander une quantité d'énergie fournie au moteur (M), et un circuit d'état (206, 266) présentant une mémoire (206M, 266M) pour le stockage d'une valeur d'état ;
dans lequel le dispositif de commande (203) est configuré pour activer l'interrupteur (204, 265) pour fournir de l'énergie au moteur (M) lorsque la valeur d'état stockée dans la mémoire (206M, 266M) est égale à une valeur souhaitée ;
dans lequel la valeur d'état stockée représente l'un des états suivants : un état non activé dans lequel l'outil électrique (200, 250) ne peut pas être allumé et un état entièrement activé dans lequel l'outil électrique (200, 250) peut fonctionner à des réglages complets et/ou présenter toutes les caractéristiques ; **caractérisé en ce que** la valeur d'état stockée peut également représenter un état partiellement activé dans lequel l'outil électrique (200, 250) peut fonctionner uniquement à un réglage de puissance plus faible et/ou présenter seulement certaines caractéristiques.

2. Système de dissuasion de vol (100) selon la revendication 1, dans lequel le circuit d'état (206, 266) est connecté au dispositif de commande (203).

3. Système de dissuasion de vol (100) selon la revendication 1 ou la revendication 2, dans lequel le circuit d'état (206, 266) est au moins l'un des circuits d'étiquette RFID passive avec mémoire réinscriptible et un circuit d'étiquette RFID active avec mémoire réinscriptible.

4. Système de dissuasion de vol (100) selon une quelconque revendication précédente, dans lequel la source d'énergie est un bloc-batterie (202, 260) pouvant être connecté au moteur (M).

5. Système de dissuasion de vol (100) selon la revendication 4, dans lequel le bloc-batterie (202, 260) comprend un circuit de commande de la batterie (263) configuré pour fournir des données et/ou des instructions au dispositif de commande (203).

6. Système de dissuasion de vol (100) selon la revendication 5, dans lequel le circuit d'état (206, 266) est connecté au circuit de commande de la batterie (263).

7. Système de dissuasion de vol (100) selon l'une quelconque des revendications 4 à 6, dans lequel l'interrupteur (265) est disposé à l'intérieur du bloc-batterie (260).

8. Système de dissuasion de vol (100) selon une quelconque revendication précédente, comprenant en outre un programmateur d'étiquette (150) pour modifier la valeur stockée.

9. Système de dissuasion de vol (100) selon une quelconque revendication précédente, dans lequel le circuit d'état (206, 266) comprend en outre une antenne (206A, 266A).

10. Système de dissuasion de vol (100) selon la revendication 9 lorsqu'il dépend de la revendication 8, dans lequel l'antenne (206A, 266A) est configurée pour recevoir un signal du programmateur d'étiquettes (150).

11. Procédé de dissuasion de vol comprenant la mise en oeuvre d'un système de dissuasion de vol (100) selon l'une quelconque des revendications précédentes.
